# EUROPÄISCHE PATENTSCHRIFT

(11) **EP 4 494 908 B1**
(45) Veröffentlichungstag und Bekanntmachung des Hinweises auf die Patenterteilung: **04.06.2025**
(21) Anmeldenummer: 23185935.6
(22) Anmeldetag: 17.07.2023
(51) Int. Cl.: B60K 1/04

(54) **BATTERIETRÄGER**
BATTERY SUPPORT
SUPPORT DE BATTERIE

(43) Veröffentlichungstag der Anmeldung: 22.01.2025
(73) Patentinhaber: Benteler Automobiltechnik GmbH, 33102 Paderborn (DE)
(72) Erfinder: Handing, Christian, 33449 Langenberg (DE); Nitschke, Christoph, 33175 Bad Lippspringe (DE); Schmitz, Stefan, 33739 Bielefeld (DE); Michel, Kai, 33154 Salzkotten (DE)
(74) Vertreter: Ksoll, Peter

(56) Entgegenhaltungen:
- WO-A1-2018/029168
- WO-A1-2022/098006
- DE-T5- 112018 002 641
- DE-U1- 202022 103 457
- US-A1- 2023 182 828

## Beschreibung

Die Erfindung betrifft einen Batterieträger gemäß den Merkmalen im Oberbegriff von Anspruch 1.

Zur Halterung von Batterieelementen für die Bereitstellung elektrischer Energie in elektrisch angetriebenen Fahrzeugen werden Batterieträger verwendet, die zwischen den Achsen des Fahrzeugs angeordnet sind. Zu den wesentlichen sicherheitstechnischen Anforderungen an einen Batterieträger gehört eine gute Crashperformance. Um diesen zu genügen ist die Batteriewanne durch eine äußere Verstärkungsstruktur geschützt. Dabei ist die Hauptfunktion der Verstärkungsstruktur der Energieabbau im Falle eines Crashs, sowie die Erhöhung der Gesamtsteifigkeit des Batterieträgers und der Karosserie. Dies erhöht die Crashsicherheit der Batterien, insbesondere bei einem Seitenaufprall.

Durch die DE 10 2018 126 068 A1 zählt ein Batterieträger für ein Elektrofahrzeug zum Stand der Technik. Der Batterieträger weist eine Batteriewanne auf, die in einen äußeren Rahmen eingesetzt ist und durch einen Deckel verschlossen ist. Der Rahmen ist im Querschnitt aus mindestens zwei miteinander gefügten Profilbauteilen hergestellt, wobei mindestens eines dieser Profilbauteile als Blechumformbauteil hergestellt ist.

Auch bei dem aus der US 2010/0307848 A1 bekannten Batterieträger ist die Batteriewanne durch eine diese außenseitig umgebende, eine Hohlkammer aufweisende Verstärkungsstruktur geschützt.

Die DE 10 2017 217 814 A1 offenbart ein Batteriegehäuse für ein Fahrzeug mit einem Batterieträger mit einem seitlich umlaufenden Außenrahmen. An den Außenrahmen ist ein Montageprofil angebunden zur Befestigung des Batteriegehäuses am Fahrzeug. Das Montageprofil kann aus mehreren Teilen zusammengesetzt sein. In einer Ausführungsform ist das Montageprofil im Querschnitt U-förmig konfiguriert mit einem Steg und zwei Schenkeln sowie einer Öffnung, wobei die Öffnung des Außenprofils zur Batteriewanne gerichtet ist und die Schenkel mit der Batteriewanne verbunden sind.

Ein Batteriegehäuse mit einem umlaufenden äußeren Anbindungsprofil wird ferner in der DE 10 2016 214 974 A1 beschrieben.

Weiterhin offenbart die WO 2017/207502 A1 ein Batteriegehäuse mit einem äußeren Anbindungsprofil.

Die DE 11 2018 002 641 T5 offenbart eine Fahrzeugkarosseriesubstruktur für das untere Teil einer Fahrzeugkarosserie.

Weiterer Stand der Technik wird durch die DE 20 2022 103 457 U1, die WO 2018/029168 A1, die US 2023/182828 A1 sowie die WO 2022/098006 A1 gebildet.

Die Batterieträger müssen mechanisch stabil sein und an der Karosserie bzw. am Fahrgestell eines Fahrzeugs befestigt werden. Die Batteriewanne soll weitestgehend in die Karosserie integriert werden, wodurch sich konstruktive und montagetechnische Herausforderungen stellen.

Die äußere Verstärkungsstruktur vor einer Seitenwand der Batteriewanne ist aus einem oder mehreren Bauteilen aufgebaut. Diese sind untereinander und mit der Batteriewanne verschweißt. Die hohe Anzahl von einzelnen Bauteilen und die Vielzahl von Schweißverbindungen kann zu einem Verzug in der Schweißkonstruktion führen. Auch führt die hohe Anzahl von einzelnen Bauteilen zu einer Erhöhung von Toleranzen bzw. Toleranzketten. Diese ebenso wie ein Schweißverzug müssen ausgeglichen werden, um eine serientaugliche Anbindung der Batteriewanne in einem Kraftfahrzeug zu gewährleisten.

Der Erfindung liegt ausgehend vom Stand der Technik die Aufgabe zugrunde, einen funktional und montagetechnisch verbesserten Batterieträger zu schaffen.

Die Lösung dieser Aufgabe besteht nach der Erfindung in einem Batterieträger gemäß Anspruch 1.

Ein Batterieträger zur Halterung von Batterieelementen für die Bereitstellung elektrischer Energie in elektrisch angetriebenen Fahrzeugen weist eine Batteriewanne mit einer Verstärkungsstruktur auf, die außenseitig vor zumindest einer Seitenwand der Batteriewanne angeordnet ist. Die Verstärkungsstruktur weist ein Außenprofil auf. Das Außenprofil ist im Querschnitt U-förmig konfiguriert mit einem Steg und zwei Schenkeln sowie einer Öffnung. Das Außenprofil ist ein einstückiger bzw. einschaliger U-förmiger Schalenkörper und weist bevorzugt keine weiteren äußeren Schalen auf, welche für den Energieabbau im Crashfall im Stand der Technik bekannt sind. Die Öffnung des Außenprofils ist zur Batteriewanne hin gerichtet. Über die Schenkel ist das Außenprofil mit der Batteriewanne verbunden.

In der Verstärkungsstruktur sind mehrere Hülsen vorgesehen. Hierbei handelt es sich um Befestigungs- bzw. Montagehülsen, welche insbesondere zylindrisch oder rechteckrohrförmig ausgebildet sind. Üblicherweise sind in Längsrichtung der Verstärkungsstruktur mehrere mit einem Abstand zueinander angeordnete Hülsen vorgesehen. Eine Hülse erstreckt sich zwischen den Schenkeln des Außenprofils über die gesamte Höhe des Außenprofils. Die Hülse verbindet Öffnungen in den Schenkeln. Die Hülsen sind koaxial zu den Öffnungen orientiert. Hülse und Öffnungen liegen auf einer gemeinsamen Längsachse. Die Hülsen dienen der Durchführung von Befestigungsmitteln, über welche der Batterieträger in der Karosserie bzw. dem Chassis eines Fahrzeugs festgelegt wird. Insbesondere erfolgt über die Hülsen und geeignete Befestigungsmittel eine Festlegung des Batterieträgers an Seitenschwellern und gegebenenfalls Bodenquerträgern im Kraftfahrzeug.

Die Verstärkungsstruktur erstreckt sich in Längsrichtung der Seitenwand. Das Außenprofil bildet zusammen mit der Seitenwand der Batteriewanne zumindest auf dem überwiegenden Teil der Länge der Verstärkungsstruktur ein Hohlprofil. Dieses zeichnet sich durch ein vorteilhaftes statisches und dynamisches Belastungsverhalten auf. Insbesondere ist die Steifigkeit der Verstärkungsstruktur quer zur Batteriewanne verbessert. Dabei können die Schenkel des Außenprofils bei einem Seitenaufprall unter Energieabbau deformieren, wobei der außenliegende Steg des Außenprofils als Zugstrebe fungiert und die Schenkel zueinander begrenzt in Position hält.

Eine vorteilhafte Ausgestaltung sieht vor, dass die Hülsen einen oberen und/oder einen unteren Kragen aufweisen. Die Hülsen weisen einen Hülsenkörper auf. An einem Ende oder an beiden Enden des Hülsenkörpers ist ein insbesondere umlaufender Kragen vorgesehen. Der Kragen ist vom Hülsenkörper nach auswärts orientiert. Insbesondere ist der Kragen werkstoffeinheitlicher Bestandteil der Hülse bzw. des Hülsenkörpers.

Es ist auch möglich, dass ein Kragen durch einen separaten Kragenkörper gebildet ist.

Die Kragen nehmen die Reib- und Druckkräfte auf, die beim Anziehen von durch die Hülse geführten Montageelemente, beispielsweise Schraubverbindungselementen, entstehen. Hierdurch kann die Oberfläche der Bauteile im Bereich einer Schraubverbindung vor Beschädigungen geschützt und die Flächenpressung reduziert werden. Insbesondere gewährleisten die Kragen einen Toleranzausgleich. Die ebene Kragenfläche ist größer als die Hülsenfläche, sodass eine horizontale Ausrichtung bzw. Positionierung der Hülsen bzw. deren Hülsenkörper vor dem Schweißen mit dem Außenprofil erfolgen kann. Die Ausrichtung erfolgt entsprechend der definierten seitlichen Montagelochabstände.

Die Hülsen können mit ihren Kragen innen an der Innenseite eines Schenkels des Außenprofils anliegen.

Die Kragen können außenseitig, also an der Außenseite, an den Schenkeln anliegen.

Möglich ist auch eine Kombination, bei der ein erster Kragen an einer Innenseite eines ersten Schenkels und ein zweiter Kragen an einer Außenseite eines zweiten Schenkels anliegt.

Eine Fügung der Hülse mit dem Außenprofil bzw. der Schenkel des Außenprofils erfolgt im Bereich der Kragen.

Die Hülsen erstrecken sich zwischen der Öffnung im unteren Schenkel und der Öffnung im oberen Schenkel und sind mit den Schenkeln gefügt. Im Bereich der Öffnung können die Schenkel verstärkt sein. Eine solche Verstärkung kann beispielsweise durch eine Materialverprägung in den Schenkeln oder eine Erhöhung der Wanddicke im Bereich einer Öffnung ausgeführt sein.

Eine weitere Ausgestaltung besteht darin, dass eine über jede Hülse mit einem oberen Hülsenabschnitt und/oder mit einem unteren Hülsenabschnitt durch eine Öffnung in einem Schenkel geführt ist. Die Hülse bzw. der Hülsenabschnitt kann mit der Außenseite des Schenkels bündig abschließen oder gegenüber der Außenseite mit dem Hülsenabschnitt vorstehen.

Die Hülsen können mehrteilig ausgebildet sein und ein erstes Hülsenelement und ein zweites Hülsenelement aufweist. Die Hülsenelemente weisen koaxiale Durchgangsöffnungen auf und sind an zueinander gerichteten Stirnseiten miteinander verbunden. Die Verbindung erfolgt insbesondere kraftschlüssig und/oder formschlüssig.

Besonders vorteilhaft weist jeder Schenkel endseitig einen Fügeflansch auf. Die Fügeflansche sind materialeinheitlich einstückiger Bestandteil der Schenkel und schließen sich endseitig an die zur Batteriewanne gerichteten Schenkel an.

Ein für die Praxis besonders vorteilhafte Ausführungsform sieht vor, dass ein unterer Schenkel einen unteren Fügeflansch aufweist, wobei der untere Fügeflansch zumindest bereichsweise unter einen Wannenboden der Batteriewanne greift. Mit dem unteren Fügeflansch ist der untere Schenkel mit der Batteriewanne stoffschlüssig gefügt, insbesondere verschweißt, vorzugsweise punktverschweißt oder punktschweißverklebt.

Ein oberer Schenkel weist einen oberen Fügeflansch auf, wobei der obere Fügeflansch mit der Seitenwand oder einem oberen Wannenrand der Batteriewanne gefügt ist.

Eine weitere Ausgestaltung sieht vor, dass ein Fügeflansch in einem Winkel zu einem Schenkel angestellt ist. Insbesondere ist der obere Fügeflansch am oberen Schenkel in einem Winkel vorzugsweise rechtwinklig zum Schenkel angestellt und von diesem weg nach außen gerichtet.

Weiterhin kann ein Schenkel mehrere Schenkelabschnitte aufweisen, wobei zumindest zwei Schenkelabschnitte relativ zueinander unterschiedlich ausgerichtet sind.

Zwischen den zumindest zwei Schenkelabschnitten kann eine Biegung, eine Krümmung, eine Stufe, ein Knick oder auch ein Absatz sein, über welchen die Schenkelabschnitte ineinander übergehen. Durch die Profilierung und die Ausrichtung der Schenkelabschnitte zueinander wird deren Steifigkeit erhöht und das Belastungsverhalten verbessert.

Im rückseitigen Steg des Außenprofils kann zumindest ein die Steifigkeit erhöhendes Versteifungselement vorgesehen sein. Ein solches Versteifungselement kann beispielsweise durch eine Sicke, eine Umstellung oder eine Verprägung ausgeführt sein.

Das Außenprofil kann bereichsweise Abschnitte mit unterschiedlicher Wanddicke und/oder voneinander verschiedenen Werkstoffgüten aufweisen. Insbesondere kann das Außenprofil partiell durch Verstärkungselemente, insbesondere Blechbauteile verstärkt sein, sogenannte Patches. Hierbei handelt es sich um Blechabschnitte bzw. Patches in geometrisch angepasster Form und Werkstoffgüte, welche vorzugsweise bereits vor dem Herstellen des Außenprofils im flachen Zustand gefügt und zusammen zum Außenprofil umgeformt werden. Die Patches sind innenseitig oder außenseitig des Außenprofils angeordnet. Auch kann das Außenprofil aus einem Tailor Rolled Blank (TRB) hergestellt sein. Hierdurch weist das Außenprofil unterschiedliche Blechdicken auf. Vorteil ist hier der homogene Übergang zwischen zwei Dickenbereichen.

Das Außenprofil und die Verstärkungselemente bzw. -bauteile können auch aus Werkstoffen unterschiedlicher Werkstoffgüte bestehen.

Auch die Seitenwand der Batteriewanne kann zumindest bereichsweise verstärkt sein oder eine Verstärkung aufweisen. Hierbei kann die Seitenwand dicker ausgeführt sein als der Rest der Batteriewanne. Besonders vorteilhaft ist die Seitenwand mit einer Verstärkung in Form von Patches in angepasster Geometrie und Werkstoffgüte versehen.

Ein Fügeflansch kann mehrere in Längsrichtung des Außenprofils mit Abstand zueinander angeordnete Fügelaschen aufweisen. Zwischen den Fügelaschen sind Ausschnitte oder Aussparungen vorgesehen.

Das Außenprofil der Verstärkungsstruktur ist mit den Fügeflanschen und/oder den Fügelaschen mit der Batteriewanne verschweißt. Hierbei ist der untere Schenkel mit der Batteriewanne im Bereich der bodenseitigen Seitenkante der Batteriewanne und der obere Schenkel des Außenprofils mit dem oberen Bereich der Seitenwand oder einem oberen Flansch der Batteriewanne verschweißt.

Für die Praxis besonders vorteilhaft wird eine stoffschlüssige Fügung mittels Punktschweißen und auch Punktschweißkleben angesehen. Das Punktschweißkleben stellt eine Kombination von Kleben mit dem Fügeverfahren Punktschweißen dar. Punktschweißfügungen ebenso wie Punktschweißklebefügungen weisen neben hohen Festigkeiten und hoher Versteifungswirkung auch eine ausreichend große Bruchdehnung auf, auch bei schlagartiger Belastung wie einem Crash.

Eine weitere für die Praxis vorteilhafte Ausführungsform sieht vor, dass in der Verstärkungsstruktur Einbauelemente vorgesehen sind. Einbauelemente können Lastleitkörper, Schottbleche und ähnlich innenliegende Verstärkungs- und/oder Funktionsbauteile sein. Sie dienen neben der reinen Verstärkung oder Versteifung definierter Längenabschnitte der Verstärkungsstruktur sowie dem erhöhten Energieabbau vor allem zur Schaffung von Lastpfaden zur gezielten Weiterleitung in die restliche Batterieträgerstruktur, insbesondere über erwähnte Innenstreben im Innenraum des Batterieträgers.

Neben Einbauelementen in der Verstärkungsstruktur können auch in der Batteriewanne Verstärkungs- bzw. Versteifungselemente integriert sein. Solche Verstärkungs- bzw. Versteifungselemente können durch Längs- und/oder Querprofil bzw. -streben gebildet sein, die sich am Wannenboden erstrecken.

Weiterhin kann ein Deckel den oberen Abschluss der Batteriewanne bilden, besonders vorteilhaft ist der Batterieträger dafür ausgelegt und bestimmt in die Karosserie bzw. im Chassis eines Fahrzeugs integriert zu werden. Der Batterieträger bildet dabei ein tragendes Teil der Karosserie (Cell-to-Body). Hierbei kann der Fußboden des Fahrzeugs den Batteriedeckel bilden.

Die Batteriewanne ist insbesondere ein einstückig und werkstoffeinheitlich ausgeführtes Tiefziehteil. Auch das Außenprofil ist vorzugsweise pressformtechnisch bzw. tiefziehtechnisch hergestellt. Durch seinen U-förmigen Querschnitt besitzt das Außenprofil einen kanalartigen Verlauf, in welchem in Längsrichtung mit Abstand zueinander mehrere Hülsen angeordnet sind.

Die Batteriewanne kann auch aus einer Blechplatine falttechnisch zur Batteriewanne geformt sein. Hierzu wird eine Blechplatine bereitgestellt, deren Geometrie der Abwicklung der Batteriewanne entspricht. Eine Kühlplatte kann optional direkt mit der Blechplatine gefügt werden, bevor diese dann falttechnisch zur Batteriewanne geformt wird. Die Batteriewanne ist als Faltbauteil ausgeführt. Faltecken der Batteriewanne sind gefügt und abgedichtet.

Die Batteriewanne, ebenso wie die Verstärkungsstruktur und die Bauteile, welche die Verstärkungsstruktur bilden, insbesondere die Außenschale, können durch Formhärten von Stahlblechen gebildet sein. Das Formhärten wird auch als Presshärten bezeichnet. Beim Formhärten wird ein Blech aus einem Mangan-Bor-Stahl auf eine Temperatur oberhalb der spezifischen Austenitisierungstemperatur des Werkstoffs erwärmt, in ein Umformwerkzeug eingelegt und zum Formbauteil warm umgeformt, wobei es während der Formgebung abkühlt. Im Umformwerkzeug eingespannt werden die Formbauteile durch Kühlung gehärtet.

Hierbei können auch beschichtete formhärtbare Stahlbleche zum Einsatz gelangen. Insbesondere handelt es sich hierbei um mit einer Aluminium/Silizium-Beschichtung versehene Mangan-Bor-Stahlbleche. Die Bauteile der Verstärkungsstruktur und der Batteriewanne weisen eine Zugfestigkeit von 1.000 MPa und höher auf.

Die Batteriewanne ebenso wie das Außenprofil der Verstärkungsstruktur können auch aus extra- und ultrahochfesten Kaltformstählen gefertigt sein. Diese Bauteile weisen eine Zugfestigkeit von mehr als 980 MPa auf. Insbesondere weist das Außenprofil eine Zugfestigkeit von größer oder gleich 1.180 MPa auf.

Grundsätzlich ist in beiden Fällen für die Batteriewanne sowie das Außenprofil auch der Einsatz von Tailored Blanks verschiedener Blechdicke, Stahlgüten und auch von Technologien zur Erstellung maßgeschneiderter Festigkeitseigenschaften mit lokal weichen Bereichen (Soft Zones) möglich, beispielsweise zu einer gezielten Steigerung der Quersteifigkeit und Erhöhung der Crashperformance ebenso wie beispielsweise zur Risspräventation beim Schweißen oder zur Einstellung lokal geschwächter Zonen mit verbesserten Deformationsvermögen zur Energieabsorption.

Die Erfindung ist nachfolgend anhand von in den Zeichnungen dargestellten Ausführungsbeispielen näher beschrieben. Es zeigen:
- Figur 1: einen erfindungsgemäßen Batterieträger in einer Querschnittsdarstellung;
- Figur 2: den Batterieträger in einer schematisierten Draufsicht;
- Figur 3: eine Ansicht auf einen Ausschnitt der Batteriewanne mit der Darstellung einer weiteren Ausführungsform einer Verstärkungsstruktur;
- Figur 4: wie 3, eine Ansicht auf einen Ausschnitt der Batteriewanne mit der Darstellung zweiter Ausführungsform einer Verstärkungsstruktur; zweite Ausführungsform;
- Figur 5: wie 3, eine Ansicht auf einen Ausschnitt der Batteriewanne mit der Darstellung dritter Ausführungsform einer Verstärkungsstruktur;
- Figur 6: eine weitere Ausführungsform eines erfindungsgemäßen Batterieträgers in einer Querschnittsdarstellung;
- Figur 7: den Batterieträger gemäß der Darstellung von Figur 6 in einer schematischen Draufsicht;
- Figur 8: eine Ansicht auf einen Ausschnitt der Batteriewanne mit der Darstellung einer weiteren Ausführungsform einer Verstärkungsstruktur;
- Figur 9: wie 8; eine Ansicht auf einen Ausschnitt der Batteriewanne mit der Darstellung einer weiteren Ausführungsform einer Verstärkungsstruktur;
- Figur 10: wie 8; eine Ansicht auf einen Ausschnitt der Batteriewanne mit der Darstellung einer weiteren Ausführungsform einer Verstärkungsstruktur;
- Figur 11: wie 8; eine Ansicht auf einen Ausschnitt der Batteriewanne mit der Darstellung einer weiteren Ausführungsform einer Verstärkungsstruktur;
- Figur 12: wie 8; eine Ansicht auf einen Ausschnitt der Batteriewanne mit der Darstellung einer weiteren Ausführungsform einer Verstärkungsstruktur;
- Figur 13: wie 8; eine Ansicht auf einen Ausschnitt der Batteriewanne mit der Darstellung einer weiteren Ausführungsform einer Verstärkungsstruktur;
- Figur 14: technisch schematisiert und vereinfacht eine Draufsicht auf eine Verstärkungsstruktur von oben;
- Figur 15: eine Draufsicht auf eine weitere Ausführungsform einer Verstärkungsstruktur;
- Figur 16: eine Draufsicht auf eine weitere Ausführungsform einer Verstärkungsstruktur;
- Figur 17: eine Draufsicht auf eine weitere Ausführungsform einer Verstärkungsstruktur;
- Figur 18: eine Draufsicht auf eine weitere Ausführungsform einer Verstärkungsstruktur;
- Figur 19: einen Querschnitt durch die Verstärkungsstruktur gemäß der Darstellung von Figur 18 im Bereich einer Hülse;
- Figur 20: einen Querschnitt durch die Verstärkungsstruktur gemäß der Darstellung der Figur 18 im Bereich eines Verstärkungselements;
- Figur 21: einen Längsschnitt durch den oberen Schenkel eines Außenprofils einer Verstärkungsstruktur;
- Figur 22: technisch schematisiert und vereinfacht eine Draufsicht auf den oberen Schenkel einer Versteifungsstruktur;
- Figur 23: einen Querschnitt durch die Versteifungsstruktur entsprechend den Darstellungen der Figuren 21 und 22 im Bereich einer Hülse;
- Figur 24: einen Querschnitt durch die Verstärkungsstruktur im Bereich außerhalb einer Hülse;
- Figur 25: ein Ausschnitt aus dem Außenprofil einer Verstärkungsstruktur und
- Figur 26: eine Ansicht auf einen Ausschnitt der Batteriewanne mit der Darstellung einer weiteren Ausführungsform einer Verstärkungsstruktur.

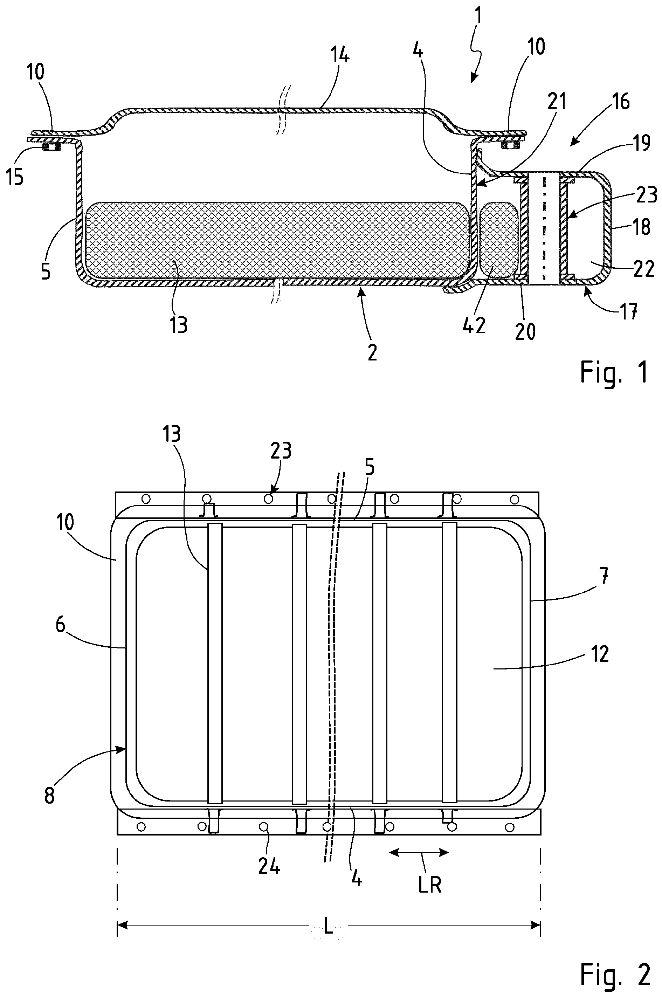

In den Figuren 1 bis 26 werden für gleich oder funktionell einander entsprechende Bauteile bzw. Bauteilkomponenten die gleichen Bezugszeichen verwendet, auch wenn aus Gründen der Vereinfachung auf eine wiederholte Beschreibung verzichtet wird.

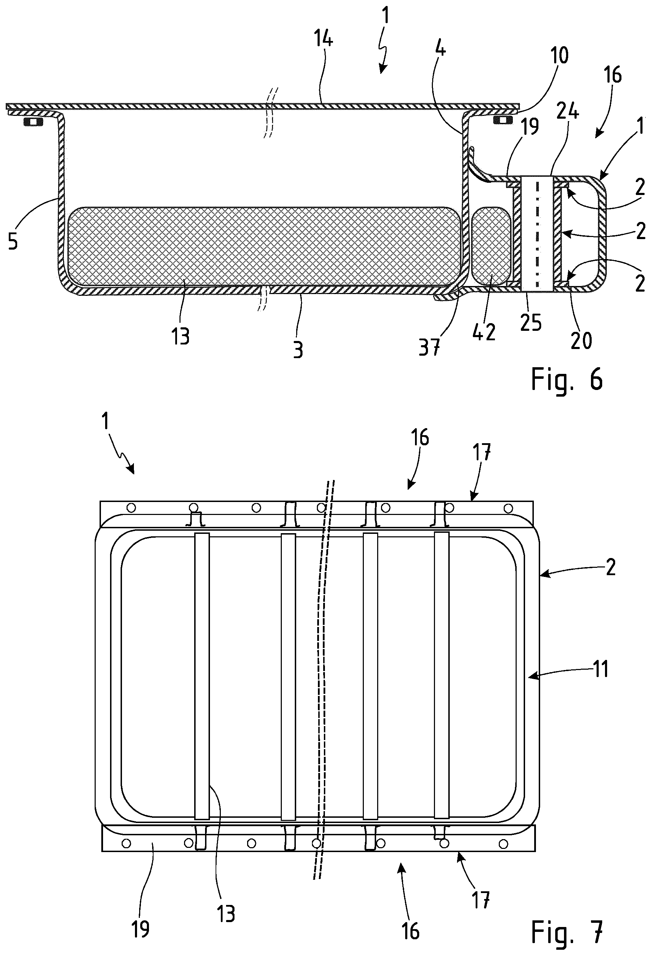

Die Figuren 1 und 2 ebenso sowie die Figuren 6 und 7 zeigen einen erfindungsgemäßen Batterieträger 1 sowie Bauteile davon.

Der Batterieträger 1 weist eine aus einem Stahlblech tiefgezogene Batteriewanne 2 auf. Die Batteriewanne 2 ist im Querschnitt rechteckig konfiguriert und weist einen Wannenboden 3 sowie Seitenwände, nämlich zwei Längswände 4, 5 und zwei Stirnwände 6, 7 auf, die sich zu einer umlaufenden Wannenwand 8 ergänzen. Am oberen Wannenrand 9 erstrecken sich entlang der Längswände 4, 5 und der Stirnwände 6, 7 nach außen gerichtete Flanschabschnitte 10, die sich ebenfalls umlaufend geschlossen zu einem oberen Flansch 11 ergänzen. Die Wannenwand 8 begrenzt einen Wanneninnenraum 12 der Batteriewanne 2.

Im Wanneninnenraum 12 sind optional eine Mehrzahl von Innenstreben 13 angeordnet. Die Innenstreben 13 erstrecken sich auf dem Wannenboden 3, quer zwischen den Längswänden 4, 5 und sind stoffschlüssig in der Batteriewanne 2 festgelegt.

Oberseitig ist die Batteriewanne 2 unter Zwischenlage einer Dichtung durch einen Deckel 14 verschlossen, der randseitig auf dem Flansch 11 aufliegt. In den dargestellten Ausführungsbeispielen ist der Deckel 14 lösbar mittels Schraubverbindungsmitteln 15 mit der Batteriewanne 2 verbunden.

Der Batterieträger 1 weist eine Verstärkungsstruktur 16 auf. Die Verstärkungsstruktur 16 erstreckt sich jeweils außenseitig der Batteriewanne 2 vor den Längswänden 4, 5.

Die Querschnittsdarstellungen in den Figuren 1 und 2 zeigen jeweils eine Verstärkungsstruktur 16 nur auf einer Seite der Batteriewanne 2. Die Darstellungen der Figuren 2 und 7 verdeutlichen, dass eine Verstärkungsstruktur 16 auf beiden Längsseiten der Batteriewanne 2 entlang der Längswände 4, 5 angeordnet ist.

Auch die Stirnwände 6, 7 können optional mit einer entsprechenden Verstärkungsstruktur 16 verbunden sein.

In einer weiteren, nicht dargestellten Ausführungsform, kann der Batterieträger 1 hinsichtlich der Einbaulage im Kraftfahrzeug im Vergleich zur Ausführungsform gemäß der Figuren 1 und 2 um 90° um die Hochachse gedreht sein, so dass der Batterieträger 1 über die Verstärkungsstruktur 16 mit Bodenquerträgern oder Leiterrahmenquerträgern gekoppelt werden könnte.

Die Verstärkungsstruktur 16 weist ein Außenprofil 17 auf. Das Außenprofil 17 ist im Querschnitt U-förmig konfiguriert und weist einen Steg 18 sowie zwei Schenkel 19, 20 und eine Öffnung 21 auf. Die Öffnung 21 erstreckt sich über die Länge L des Außenprofils 17, die der Länge der Verstärkungsstruktur 16 entspricht. Die Öffnung 21 des Außenprofils 17 ist zur Batteriewanne 2 hin gerichtet. Die Schenkel 19, 20 sind mit der Batteriewanne 2 verbunden. Die zur Batteriewanne 2 gerichtete Öffnung 21 des Außenprofils 17 wird durch eine Längswand 4 bzw. 5 der Batteriewanne 2 verschlossen. Der rückwärtige Steg 18 liegt außen auf der von der Längswand 4, 5 der Batteriewanne 2 abgewandten Seite.

Das Außenprofil 17 ist ein Blechformteil, welches einstückig aus einem Stahlblech geformt ist. Das Außenprofil 17 kann ein formgehärtetes Stahlblechbauteil oder ein kaltgeformtes Formbauteil aus insbesondere ultrahochfesten (UHSS) Kaltformstählen sein. Ein UHSS-Formbauteil weist eine Zugfestigkeit Rm > 980 MPa und eine anteilige martensitische Gefügestruktur auf.

Die Schenkel 19, 20 und der Steg 18 umschließen einen Längskanal. Das Außenprofil 17 bildet zusammen mit jeweils einer Längswand 4, 5 der Batteriewanne 2 zumindest auf dem überwiegenden Teil der Länge L der Verstärkungsstruktur 16 ein Hohlprofil 22 aus. Die Verstärkungsstruktur 16 erstreckt sich in Längsrichtung LR vor einer Seitenwand 4, 5.

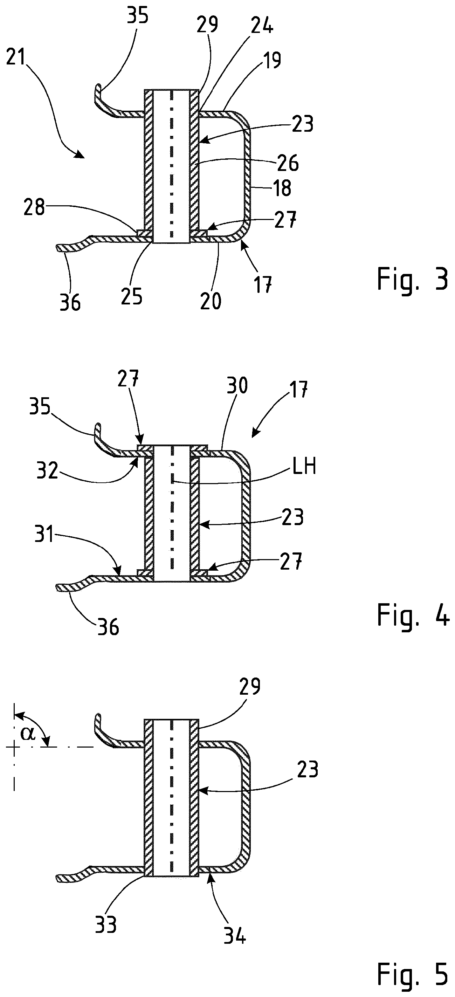

Im Außenprofil 17 der Verstärkungsstruktur 16 sind mehrere Hülsen 23 vorgesehen. Diese erstrecken sich vertikal zwischen den Schenkeln 19, 20 des Außenprofils 17. In dem oberen Schenkel 19 und in dem unteren Schenkel 20 sind jeweils Öffnungen 24, 25 vorgesehen, welche durch die Hülsen 23 verbunden werden (siehe hierzu auch die Figuren 3 bis 5).

Die Hülsen 23 sind in Längsrichtung LR des Außenprofils 17 und der Verstärkungsstruktur 16 mit Abstand zueinander angeordnet.

Jede Hülse 23 weist einen Hülsenkörper 26 auf. Bei der Hülse 23 in der Ausführungsform gemäß Figur 3 ist am unteren Ende des Hülsenkörpers 26 ein umlaufender Kragen 27 vorgesehen. Dieser kann durch einen separaten Scheibenkörper 28 gebildet sein. Der Kragen 27 kann auch materialeinheitlich einstückiger Bestandteil der Hülse 23 sein. Mit einem Hülsenabschnitt 29 am oberen Ende des Hülsenkörpers 26 ist die Hülse 23 durch die Öffnung 24 im oberen Schenkel 19 geführt und steht gegenüber der Außenseite 30 des oberen Schenkels 19 vor.

Bei der Hülse 23 gemäß der Ausführungsform von Figur 4 ist am unteren Ende des Hülsenkörpers 26 ein Kragen 27 vorgesehen. Dieser umschließt die untere Öffnung 25 im unteren Schenkel 20 konzentrisch und liegt an der Innenseite 31 des unteren Schenkels 20 an. Der Hülsenkörper 26 der Hülse 23 liegt am oberen Schenkel 19 umlaufend um die Öffnung 24 auf der Innenseite 32 des oberen Schenkels 19 an. Außenseitig konzentrisch zur Öffnung 29 bzw. der Hülsenlängsachse LH ist ein oberer Kragen 27 vorgesehen, welcher auf der Außenseite 30 des oberen Schenkels 19 aufliegt.

Bei der Hülse 23 gemäß der Darstellung der Figur 5 weist die Hülse 23 bzw. deren Hülsenkörper 26 einen oberen Hülsenabschnitt 29 und einen unteren Hülsenabschnitt 33 auf. Mit dem oberen Hülsenabschnitt 29 ist die Hülse 23 durch die Öffnung 24 im oberen Schenkel 19 geführt. Mit dem unteren Hülsenabschnitt 33 ist die Hülse 23 durch die Öffnung 25 im unteren Schenkel 20 geführt.

Der untere Hülsenabschnitt 33 schließt in etwa bündig mit der Außenseite 34 des unteren Schenkels 20 ab. Der obere Hülsenabschnitt 29 steht gegenüber der Außenseite 30 des oberen Schenkels 19 vor.

Bei den Hülsen 23 in der Ausführungsform gemäß der Darstellungen der Figuren 1 und 6 ist jeweils am oberen Ende und am unteren Ende des Hülsenkörpers 26 ein Kragen 27 vorgesehen, mit welchem die Hülse 23 innenseitig am oberen Schenkel 19 bzw. am unteren Schenkel 20 anliegt.

Die Öffnungen 24 im oberen Schenkel 19 und die Öffnungen 25 im unteren Schenkel 20, die Hülsen 23 sowie die Kragen 27 liegen jeweils auf einer gemeinsamen Hülsenlängsachse LH und sind konzentrisch zu dieser angeordnet.

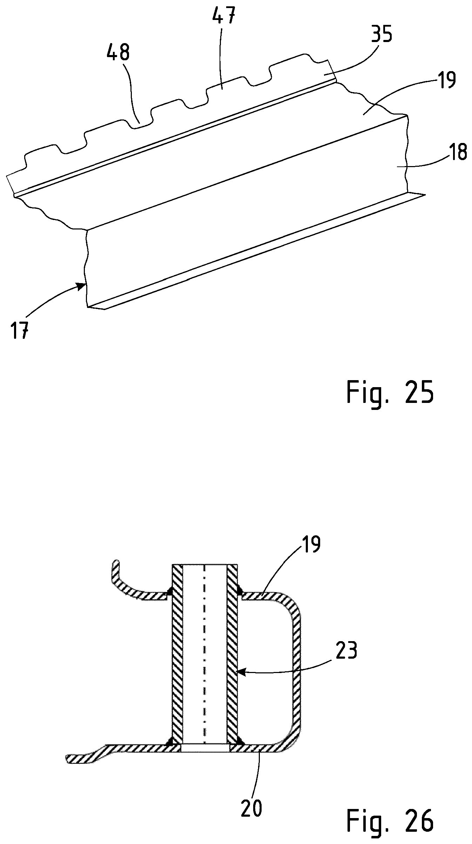

Ein Toleranzausgleich kann bei der kragenlose Hülse 23 gemäß Figur 5 bei direkter Kopplung mit den Schenkeln 19, 20 über ein geeignetes Schweißverfahren mit relativ viel Schweißzusatzstoff erfolgen. Dies ist exemplarisch in Figur 26 gezeigt.

Endseitig der Schenkel 19, 20 sind Fügeflansche 35, 36 vorgesehen.

Der untere Schenkel 20 weist einen unteren Fügeflansch 36 auf. Der untere Fügeflansch 36 greift zumindest bereichsweise unter den Wannenboden 3 der Batteriewanne 2 und ist mit der Batteriewanne 2 gefügt.

Der obere Fügeflansch 35 am oberen Schenkel 19 ist in einem Winkel α zum oberen Schenkel 19 angestellt. In der Ausführungsform gemäß der Figuren 1 sowie 3 bis 6 ist der Fügeflansch 35 quer zum oberen Schenkel 19 nach außen gerichtet und insbesondere rechtwinklig vom oberen Schenkel 19 weggerichtet. Der Übergang vom Schenkel 19 zum Fügeflansch 35 ist gerundet.

Das Außenprofil 17 ist mit der Batteriewanne 2 stoffschlüssig gefügt. Dies erfolgt über den unteren Fügeflansch 36 und den oberen Fügeflansch 35. Der untere Fügeflansch 36 greift bereichsweise unter den unteren Längskantenabschnitt 37 der Batteriewanne 2. Der obere Fügeflansch 35 stützt sich gegen die Seitenwand 4, 5 der Batteriewanne 2 ab.

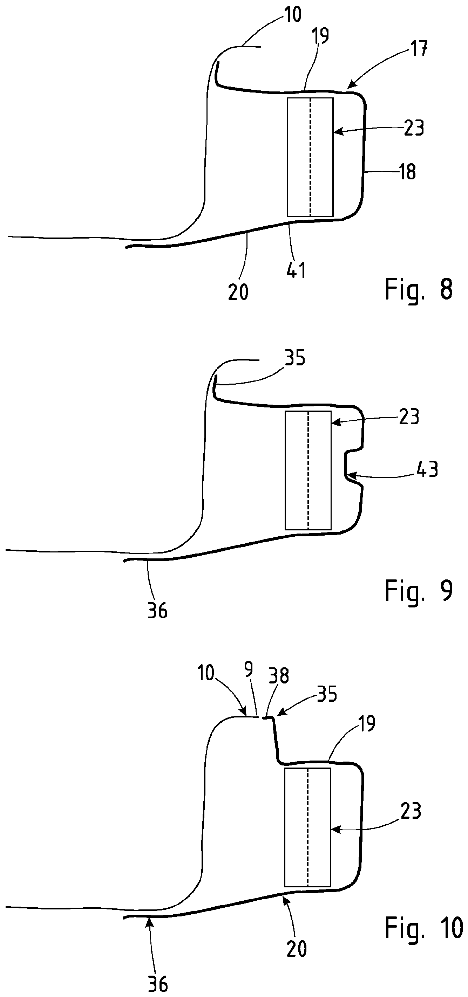

Bei der Darstellung der Figur 10 ist am oberen Fügeflansch 35 ein zum oberen Wannenrand 9 der Batteriewanne 2 gerichteter Fügesteg 38 abgekantet. Der Fügesteg 38 stößt stumpf gegen die Außenkante des oberen Flanschs 11 und ist mit diesem gefügt, insbesondere durch Laserschweißen.

Die stoffschlüssige Fügung von Außenprofil 17 und Batteriewanne 2 erfolgt mit Ausnahme des Stumpfstoßes insbesondere durch Punktschweißen oder Punktschweißkleben.

Die in den Figuren 8 bis 19 sowie 22 und 23 dargestellten Hülsen 23 sind technisch vereinfacht dargestellt und schematisch zu verstehen. Die Hülsen 23 erstrecken sich jeweils zwischen einer Öffnung 25 im unteren Schenkel 20 und einer Öffnung 24 im oberen Schenkel 19 des Außenprofils 17 und verbinden diese. Die Hülsen 23 sind dafür eingerichtet und bestimmt, dass Schraubverbindungsmittel durch diese hindurchgeführt und der Batterieträger 1 in der Karosserie bzw. einem Chassis eines Fahrzeugs festgelegt werden kann. Die Hülse 23 hat dabei grundsätzlich auch eine Stützfunktion des Außenprofils 17 selbst gegen schraubkraftbedingte Verformung. Der Anbau des Batterieträgers 1 in einem Fahrzeug erfolgt über das Außenprofil 17 und den darin angeordneten Hülsen 23 mittels geeigneter Schraubfestigungsmittel.

Insbesondere der untere Schenkel 20 kann zumindest zwei Schenkelabschnitte 39, 40 aufweisen, welche relativ zueinander unterschiedlich ausgerichtet sind. Diesbezüglich ist auf die Ausführungsformen des Außenprofils 17 gemäß der Darstellungen 8 bis 10 zu verweisen. Der untere Schenkel 20 weist einen ersten Schenkelabschnitt 39 auf. Der erste Schenkelabschnitt 39 erstreckt sich im Wesentlichen parallel zum oberen Schenkel 19. Im ersten Schenkelabschnitt 39 des unteren Schenkels 20 befindet sich die Öffnung 25 und die mit der Öffnung 25 kommunizierende Hülse 23. An den ersten Schenkelabschnitt 39 schließt sich über eine Kantung 41 der zweite Schenkelabschnitt 40 an, der in einem spitzen Winkel vom ersten Schenkelabschnitt 39 weggerichtet in Richtung zum unteren Fügeflansch 36 verläuft. Insbesondere ist der erste Schenkelabschnitt 39 lokal an eine Stirnfläche der Hülse 23 angepasst ausgeformt bzw. verprägt, während der zweite Schenkelabschnitt 40 von einer Projektionsebene der Stirnfläche der Hülse 23 versetzt und/oder geneigt ausgerichtet ist.

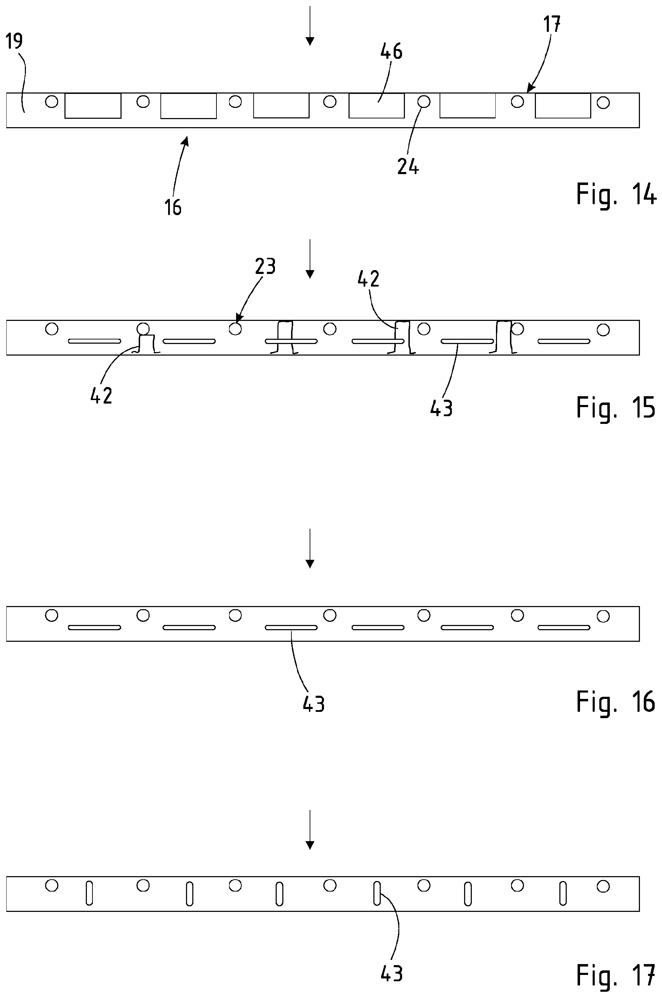

In der Figur 1 ebenso wie in den Figuren 6 und 7 schematisiert und vereinfacht dargestellt, ist ein Einbauelement 42, welches in das Außenprofil 17 der Verstärkungsstruktur 16 eingebaut ist. Solche Einbauelemente 42 können beispielsweise Lastleitkörper oder Schottbleche sein. Diese sind mit dem Außenprofil 17 gefügt, insbesondere stoffschlüssig gefügt. Einbauelemente 42, die hutförmig konfiguriert sind und unterschiedliche Höhen aufweisen, sind auch in der Figur 15 in einer Draufsicht zu erkennen.

Die Figuren 8 bis 13 zeigen jeweils das Außenprofil 17 einer Verstärkungsstruktur 16 und einen Ausschnitt aus der Batteriewanne 2. Die Hülse 23 ist kragenlos ausgeführt und schließt bündig mit dem unteren Schenkel 20 und dem oberen Schenkel 19 ab und erstreckt sich zwischen den Öffnungen 24, 25. Die Hülse 23 kann durch Hülsenformen gemäß der Figuren 1 sowie 3 bis 5 ersetzt werden. Die Figuren sind technisch vereinfacht dargestellt und schematisch zu verstehen.

Das Außenprofil 16 ist ein warmgeformtes und pressgehärtetes oder kaltgeformtes hochfestes Schalenbauteil. Die Batteriewanne 2 ist ein warmgeformtes und pressgehärtetes Stahlblechbauteil oder ein kaltgeformtes Formbauteil aus ultrahochfestem Kaltformstahl.

Die Längswände 4, 5 der Batteriewanne 2 können bereichsweise verstärkt sein und insbesondere aus einem Tailor Welded Blank, ein Tailor Rolled Blank oder durch Blechbauteile bzw. Patches verstärkt sein. Das Außenprofil 17 ist jeweils mit der Batteriewanne 2 gefügt.

Bei den Ausführungsformen gemäß der Darstellungen der Figuren 9, 12 und 13 ist im außenseitigen Steg 18 des Außenprofils 17 ein Versteifungselement 43 in Form einer Sicke vorgesehen.

Versteifungselemente 43 in Form von Sicken in unterschiedlichen Ausgestaltungen sind auch in den Figuren 15, 16 und 17 dargestellt.

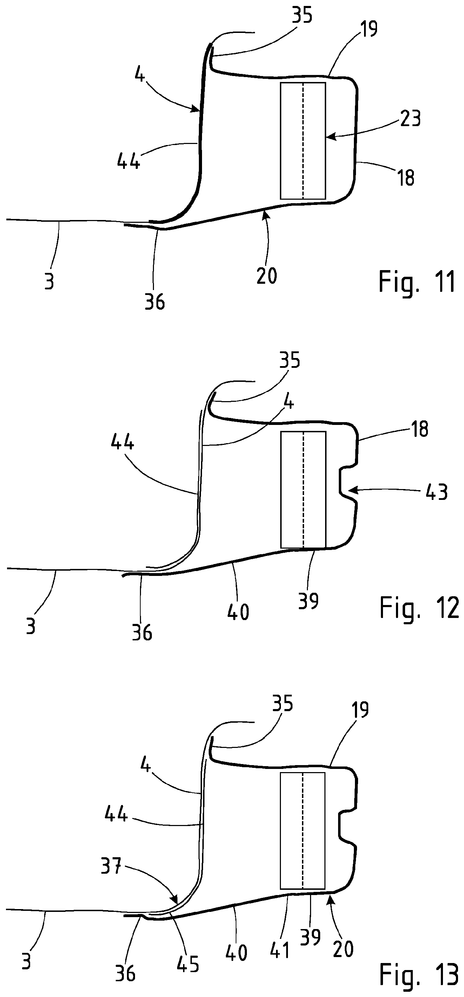

Eine partiell im Bereich der Seitenwand 4 durch eine Verstärkung 49 verstärkte Batteriewanne 2 zeigt die Darstellung der Figur 11. Die Seitenwand 4 ist zumindest bereichsweise dicker ausgeführt als der Wannenboden 3 und der obere Wannenrand 9. Die Batteriewanne 2 ist hierzu aus einem Tailor Rolled Blank gefertigt.

Bei der Ausführungsform gemäß der Darstellung der Figur 12 ist die Seitenwand 4 der Batteriewanne 2 innenseitig durch eine Verstärkung in Form eines Patches verstärkt.

Bei der Ausführungsform gemäß der Darstellung der Figur 13 ist die Seitenwand 4 der Batteriewanne 2 außenseitig auf der zur Öffnung 21 des Außenprofils 17 liegenden Seite durch eine Verstärkung 49 in Form eines Patches verstärkt. Die Verstärkung 49 erstreckt um den unteren Längskantenabschnitt 37 der Batteriewanne 2. Der untere Fügeflansch 36 erstreckt sich über den unteren Abschnitt 45 der Verstärkung 44 und ist mit dem Wannenboden 3 gefügt.

Verstärkungselemente 46 im Außenprofil 17 sind innerhalb der Verstärkungsstruktur 16 im Außenprofil 17 gemäß der Ausführungsform der Figur 14 in Längsrichtung mit Abstand angeordnet. Insbesondere sind Verstärkungsbauteile jeweils zwischen den Hülsen 23 platziert. Bei den Verstärkungselemente 46 handelt es sich vorzugswiese um Blechabschnitte bzw. Patches, die innenseitig oder außenseitig mit dem Außenprofil 17 gefügt sein können.

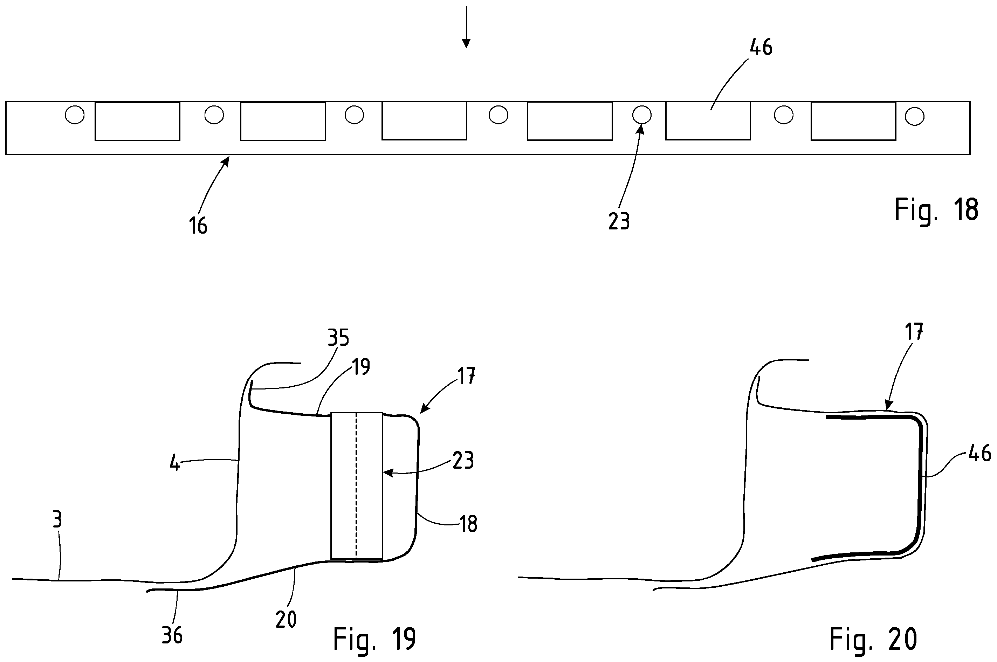

Eine solche Ausgestaltung zeigt auch die Figur 18.

In den Figuren 14 bis 18 zeigt der Pfeil die Aufprallrichtung bei einem Seitenaufprall.

Die Figur 19 zeigt einen Schnitt durch das Außenprofil 17 der Verstärkungsstruktur 16 im Bereich einer Hülse 23.

Die Figur 20 zeigt einen Schnitt durch das Außenprofil 17 im Bereich eines Verstärkungselements 46. Hierbei handelt es sich um U-förmig konfigurierte Patches, die an die Innenkontur des Außenprofils 16 angepasst sind und die den oberen Schenkel 19 und dem unteren Schenkel 20 bereichsweise und den hinteren Steg 18 des Außenprofils 17 vollständig abdecken.

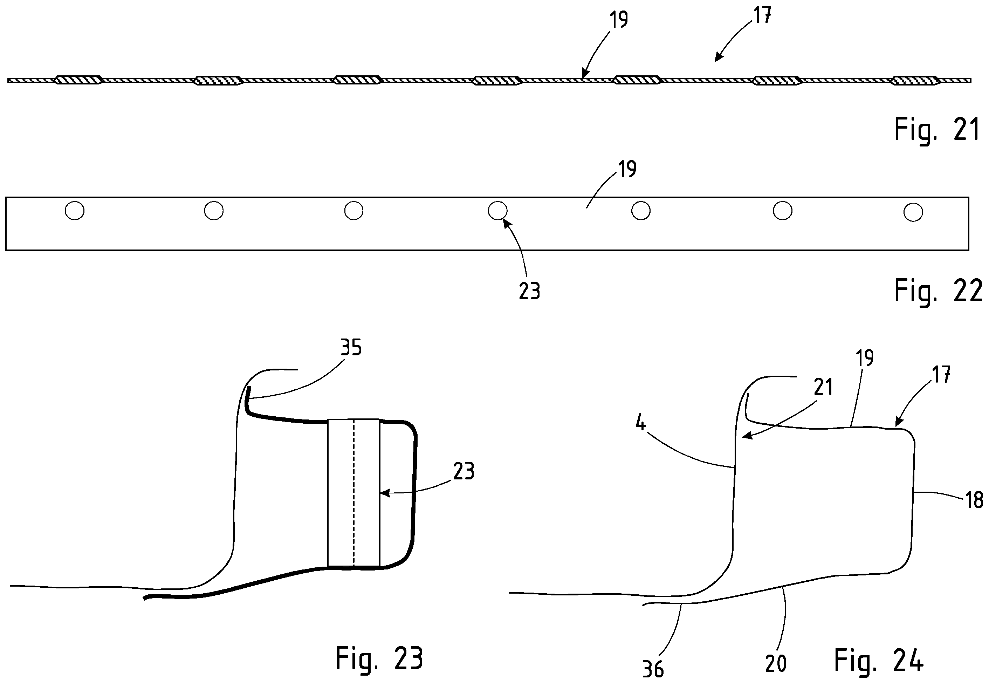

Anhand der Figuren 21 bis 24 ist das Außenprofil 17 einer Verstärkungsstruktur 16 erläutert, welches aus einem Tailored Welded Blank gefertigt ist. Die Figur 21 zeigt einen Schnitt durch den oberen Schenkel 19. Man erkennt die verschiedenen Wanddicken. Jeweils im Bereich einer Hülse 23 ist die Wanddicke größer als in den dazwischenliegenden Schenkelabschnitten 39, 40. Die Figur 23 zeigt einen Schnitt durch das Außenprofil 17 im Bereich einer Hülse 23. Die Figur 24 zeigt einen Schnitt durch das Außenprofil 17 im Bereich außerhalb einer Hülse 23.

Anhand der Darstellung der Figur 25 ist zu erkennen, dass ein Fügeflansch 35, 36 im dargestellten Ausführungsbeispiel der obere Fügeflansch 35 mehrere in Längsrichtung des Außenprofils 17 mit Abstand zueinander angeordnete Fügelaschen aufweist. Zwischen den Fügelaschen 47 sind jeweils Aussparungen 48 im Fügeflansch 35 vorgesehen.

### Bezugszeichen:

1 - Batterieträger
2 - Batteriewanne
3 - Wannenboden
4 - Längswand
5 - Längswand
6 - Stirnwand
7 - Stirnwand
8 - Wannenwand
9 - Wannenrand
10 - Flanschabschnitt
11 - oberer Flansch
12 - Wanneninnenraum
13 - Innenstreben
14 - Deckel
15 - Schraubverbindungsmittel
16 - Verstärkungsstruktur
17 - Außenprofil
18 - Steg
19 - Schenkel
20 - Schenkel
21 - Öffnung
22 - Hohlprofil
23 - Hülse
24 - Öffnung
25 - Öffnung
26 - Hülsenkörper
27 - Kragen
28 - Scheibenkörper
29 - Hülsenabschnitt
30 - Außenseite von 19
31 - Innenseite von 20
32 - Innenseite von 19
33 - Hülsenabschnitt
34 - Außenseite von 20
35 - oberer Fügeflansch
36 - unterer Fügeflansch
37 - Längskantenabschnitt
38 - Fügesteg
39 - Schenkelabschnitt
40 - Schenkelabschnitt
41 - Kantung
42 - Einbauelement
43 - Versteifungselement
44 - Verstärkung
45 - Abschnitt von 44
46 - Verstärkungselement
47 - Fügelasche
48 - Aussparung
   L - Länge
LH - Hülsenlängsachse
LR - Längsrichtung
   α - Winkel

## Patentansprüche

1. Batterieträger (1) mit einer Batteriewanne (2) und einer Verstärkungsstruktur (16), die außenseitig vor einer Seitenwand (4, 5) der Batteriewanne (2) angeordnet ist, wobei die Verstärkungsstruktur (16) ein Außenprofil (17) aufweist, welches im Querschnitt U-förmig konfiguriert ist mit einem Steg (18) und zwei Schenkeln (19, 20) sowie einer Öffnung (21), wobei die Öffnung (21) des Außenprofils (17) zur Batteriewanne (2) gerichtet ist und die Schenkel (19, 20) mit der Batteriewanne (2) verbunden sind, wobei mehrere Hülsen (23) vorgesehen sind, wobei sich eine Hülse (23) jeweils zwischen den Schenkeln (19, 20) erstreckt und Öffnungen (24, 25) in den Schenkeln (19, 20) verbindet, **dadurch gekennzeichnet, dass** sich die Verstärkungsstruktur (16) in Längsrichtung (LR) der Seitenwand (4, 5) erstreckt und das Außenprofil (17) mit der Seitenwand (4, 5) zumindest auf dem überwiegenden Teil der Länge (L) der Verstärkungsstruktur (16) ein Hohlprofil (22) bildet und/oder dass sich die Verstärkungsstruktur (16) in Längsrichtung (LR) der Seitenwand (4, 5) erstreckt und das Außenprofil (17) mit der Seitenwand (4, 5) zumindest auf dem überwiegenden Teil der Länge (L) der einen Seitenwand (4, 5) ein Hohlprofil (22) bildet.

2. Batterieträger nach Anspruch 1, **dadurch gekennzeichnet, dass** eine oder jede Hülse (23) einen oberen und/oder einen unteren Kragen (27) aufweist.

3. Batterieträger nach Anspruch 1 oder 2, **dadurch gekennzeichnet, dass** eine oder jede Hülse (23) mit einem oberen Hülsenabschnitt (29) und/oder mit einem unteren Hülsenabschnitt (33) durch eine Öffnung (24, 25) in einem Schenkel (19, 20) geführt ist und mit einer Außenseite (30, 34) des Schenkels (19, 20) bündig abschließt oder gegenüber der Außenseite (30, 34) vorsteht.

4. Batterieträger nach einem der Ansprüche 1 bis 3, **dadurch gekennzeichnet, dass** jeder Schenkel (19, 20) endseitig einen Fügeflansch (35, 36) aufweist.

5. Batterieträger nach Anspruch 4, **dadurch gekennzeichnet, dass** ein unterer Schenkel (20) einen unterer Fügeflansch (36) aufweist, wobei der untere Fügeflansch (36) zumindest bereichsweise unter einen Wannenboden (3) der Batteriewanne (2) greift.

6. Batterieträger nach Anspruch 4 oder 5, **dadurch gekennzeichnet, dass** ein Fügeflansch (35, 36) in einem Winkel (α) zu einem Schenkel (19, 20) angestellt ist.

7. Batterieträger nach einem der Ansprüche 4 bis 6, **dadurch gekennzeichnet, dass** ein oberer Schenkel (19) einen oberen Fügeflansch (35) aufweist, wobei der obere Fügeflansch (35) mit der Seitenwand (4, 5) oder einem oberen Wannenrand (9) der Batteriewanne (2) gefügt ist.

8. Batterieträger nach einem der Ansprüche 1 bis 7, **dadurch gekennzeichnet, dass** zumindest ein Schenkel (19, 20) mehrere Schenkelabschnitte (39, 40) aufweist, wobei zumindest zwei Schenkelabschnitte (39, 40) relativ zueinander unterschiedlich ausgerichtet sind, insbesondere ist der erste Schenkelabschnitt (39) lokal an eine Stirnfläche der Hülse (23) angepasst ausgeformt bzw. verprägt.

9. Batterieträger nach einem der Ansprüche 1 bis 8, **dadurch gekennzeichnet, dass** in der Verstärkungsstruktur (16) Einbauelemente (42) vorgesehen sind, wobei die Einbauelemente (42) insbesondere als Lastleitelemente ausgebildet und Bestandteil der Hülsen (23) sind.

10. Batterieträger nach einem der Ansprüche 1 bis 9, **dadurch gekennzeichnet, dass** das Außenprofil (17) zumindest ein als Patch bzw. Patchwork ausgebildetes Verstärkungselement (46) aufweist.

11. Batterieträger nach einem der Ansprüche 1 bis 10, **dadurch gekennzeichnet, dass** im Steg (18) zumindest ein Versteifungselement (43), insbesondere eine Sicke, vorgesehen ist.

12. Batterieträger nach einem der Ansprüche 1 bis 11, **dadurch gekennzeichnet, dass** das Außenprofil (17) bereichsweise Abschnitte mit unterschiedlicher Wanddicke und/oder voneinander verschiedenen Werkstoffgüten aufweist.

13. Batterieträger nach einem der Ansprüche 1 bis 12, **dadurch gekennzeichnet, dass** die Seitenwand (4, 5) der Batteriewanne (2) zumindest bereichsweise verstärkt ist oder eine Verstärkung (44) aufweist, insbesondere dergestalt, dass zumindest 30 %, bevorzugt mindestens 40 % der Fläche der Seitenwand (4, 5) doppellagig ausgebildet ist.

14. Batterieträger nach einem der Ansprüche 1 bis 13, **dadurch gekennzeichnet, dass** ein Fügeflansch (35, 36) mehrere in Längsrichtung des Außenprofils (17) mit Abstand zueinander angeordnete Fügelaschen (47) aufweist, wobei die Fügeflansche (35, 36) insbesondere mit der Batteriewanne (2) punktverschweißt oder punktschweißgeklebt sind.

15. Batterieträger nach einem der Ansprüche 1 bis 14, **dadurch gekennzeichnet, dass** die Hülse (23) mehrteilig ausgebildet ist und ein erstes Hülsenelement und ein zweites Hülsenelement aufweist, wobei die Hülsenelemente koaxiale Durchgangsöffnungen aufweisen und an zueinander gerichteten Stirnseiten miteinander verbunden sind.

## Claims

1. Battery support (1) with a battery tray (2) and a reinforcing structure (16) which is disposed on the outside in front of a side wall (4, 5) of the battery tray (2), wherein the reinforcing structure (16) has an outer profile (17) which is configured to be U-shaped in cross-section with a web (18) and two legs (19, 20) as well as an opening (21), wherein the opening (21) of the outer profile (17) is directed towards the battery tray (2) and the legs (19, 20) are connected to the battery tray (2), wherein multiple sleeves (23) are provided, wherein a sleeve (23) extends between the legs (19, 20) and connects openings (24, 25) in the legs (19, 20), **characterised in that** the reinforcing structure (16) extends in the longitudinal direction (LR) of the side wall (4, 5) and the outer profile (17) forms with the side wall (4, 5) at least one hollow profile (22) over the most of the length (L) of the reinforcing structure (16), and/or **in that** the reinforcing structure (16) extends in the longitudinal direction (LR) of the side wall (4, 5) and the outer profile (17) forms a hollow profile (22) with the side wall (4, 5) at least over most of the length (L) of one side wall (4, 5).

2. Battery support according to claim 1, **characterised in that** one or each sleeve (23) has an upper and/or a lower collar (27).

3. Battery support according to claim 1 or claim 2, **characterised in that** one or each sleeve (23) is guided with an upper sleeve section (29) and/or with a lower sleeve section (33) through an opening (24, 25) in a leg (19, 20) and is flush with an outer side (30, 34) of the leg (19, 20) or protrudes relative to the outer side (30, 34).

4. Battery support according to any one of claims 1 to 3, **characterised in that** each leg (19, 20) has a joining flange (35, 36) at its end.

5. Battery support according to claim 4, **characterised in that** a lower leg (20) has a lower joining flange (36), wherein the lower joining flange (36) engages at least in some sections below a tray base (3) of the battery tray (2).

6. Battery support according to claim 4 or claim 5, **characterised in that** a joining flange (35, 36) is set at an angle (α) to a leg (19, 20).

7. Battery support according to any one of claims 4 to 6, **characterised in that** an upper leg (19) has an upper joining flange (35), wherein the upper joining flange (35) is joined to the side wall (4, 5) or an upper tray edge (9) of the battery tray (2).

8. Battery support according to any one of claims 1 to 7, **characterised in that** at least one leg (19, 20) has multiple leg sections (39, 40), wherein at least two leg sections (39, 40) are aligned differently relative to one another, in particular the first leg section (39) is shaped or preformed adapted locally to an end face of the sleeve (23).

9. Battery support according to any one of claims 1 to 8, **characterised in that** installation elements (42) are provided in the reinforcement structure (16), wherein the installation elements (42) are configured in particular as load-conducting elements and are part of the sleeves (23).

10. Battery support according to any one of claims 1 to 9, **characterised in that** the outer profile (17) has at least one reinforcing element (46) in the form of a patch or patchwork.

11. Battery support according to any one of claims 1 to 10, **characterised in that** at least one reinforcing element (43), in particular a bead, is provided in the web (18).

12. Battery support according to any one of claims 1 to 11, **characterised in that** the outer profile (17) has portions in some sections with different wall thicknesses and/or different material qualities.

13. Battery support according to any one of claims 1 to 12, **characterised in that** the side wall (4, 5) of the battery tray (2) is reinforced at least in some sections or has a reinforcement (44), in particular such that at least 30%, preferably at least 40% of the area of the side wall (4, 5) is configured as a double layer.

14. Battery support according to any one of claims 1 to 13, **characterised in that** a joining flange (35, 36) has multiple joining tabs (47) disposed at a distance from one another in the longitudinal direction of the outer profile (17), wherein the joining flanges (35, 36) are in particular spot-welded or spot-weld bonded to the battery tray (2).

15. Battery support according to any one of claims 1 to 14, **characterised in that** the sleeve (23) is configured in multiple parts and has a first sleeve element and a second sleeve element, wherein the sleeve elements have coaxial through-openings and are connected to one another at end sides that face each other.

## Revendications

1. Support (1) de batterie comprenant un bac (2) de batterie et une structure de renfort (16) qui est disposée à l'extérieur devant une paroi latérale (4, 5) du bac (2) de batterie, dans lequel la structure de renfort (16) présente un profil extérieur (17), lequel est configuré en forme de U en section transversale avec un élément de jonction (18) et deux branches (19, 20) ainsi qu'une ouverture (21), dans lequel l'ouverture (21) du profil extérieur (17) est orienté vers le bac (2) de batterie et les branches (19, 20) sont reliées au bac (2) de batterie, dans lequel plusieurs douilles (23) sont prévues, dans lequel une douille (23) s'étend entre les branches (19, 20) respectives et relie des ouvertures (24, 25) dans les branches (19, 20), **caractérisé en ce que** la structure de renfort (16) s'étend dans la direction longitudinale (LR) de la paroi latérale (4, 5) et le profilé extérieur (17) forme avec la paroi latérale (4, 5) un profilé creux (22) au moins sur la majeure partie de la longueur (L) de la structure de renfort (16) et/ou **en ce que** la structure de renfort (16) s'étend dans la direction longitudinale (LR) de la paroi latérale (4, 5) et le profilé extérieur (17) forme un profilé creux (22) avec la paroi latérale (4, 5) au moins sur la majeure partie de la longueur (L) de ladite une paroi latérale (4, 5).

2. Support de batterie selon la revendication 1, **caractérisé en ce qu'**une ou chaque douille (23) présente un collet supérieur et/ou inférieur (27).

3. Support de batterie selon la revendication 1 ou la revendication 2, **caractérisé en ce qu'**une ou chaque douille (23) est guidée avec une section supérieure (29) de douille et/ou avec une section inférieure (33) de douille à travers une ouverture (24, 25) dans une branche (19, 20) et se termine à fleur avec un côté extérieur (30, 34) de la branche (19, 20) ou dépasse du côté extérieur (30, 34).

4. Support de batterie selon l'une quelconque des revendications 1 à 3, **caractérisé en ce que** chaque branche (19, 20) présente côté extrémité une bride d'assemblage (35, 36).

5. Support de batterie selon la revendication 4, **caractérisé en ce qu'**une branche inférieure (20) présente une bride d'assemblage inférieure (36), dans lequel la bride d'assemblage inférieure (36) s'insère au moins par endroits sous un fond (3) de bac du bac (2) de batterie.

6. Support de batterie selon la revendication 4 ou la revendication 5, **caractérisé en ce qu'**une bride d'assemblage (35, 36) est placée à un angle (α) par rapport à une branche (19, 20).

7. Support de batterie selon l'une quelconque des revendications 4 à 6, **caractérisé en ce qu'**une branche (19) supérieure présente une bride d'assemblage supérieure (35), dans lequel la bride d'assemblage supérieure (35) est assemblée avec la paroi latérale (4, 5) ou un bord (9) de bac supérieur du bac (2) de batterie.

8. Support de batterie selon l'une quelconque des revendications 1 à 7, **caractérisé en ce qu'**au moins une branche (19, 20) présente plusieurs sections (39, 40) de branche, dans lequel au moins deux sections (39, 40) de branche sont orientées différemment l'une par rapport à l'autre, en particulier la première section (39) de branche fait saillie ou dépasse de manière localement adaptée à une surface frontale de la douille (23).

9. Support de batterie selon l'une quelconque des revendications 1 à 8, **caractérisé en ce que** des éléments de montage (42) sont prévus dans la structure de renfort (16), dans lequel les éléments de montage (42) sont en particulier réalisés en tant qu'éléments de guidage de charge et font partie intégrante des douilles (23).

10. Support de batterie selon l'une quelconque des revendications 1 à 9, **caractérisé en ce que** le profilé extérieur (17) présente au moins un élément de renfort (46) réalisé en tant que patch ou patchwork.

11. Support de batterie selon l'une quelconque des revendications 1 à 10, **caractérisé en ce qu'**au moins un élément de raidissement (43), notamment une moulure, est prévu dans l'élément de jonction (18).

12. Support de batterie selon l'une quelconque des revendications 1 à 11, **caractérisé en ce que** le profilé extérieur (17) présente par endroits des sections d'épaisseur de paroi différente et/ou de qualités de matériau différentes les unes des autres.

13. Support de batterie selon l'une quelconque des revendications 1 à 12, **caractérisé en ce que** la paroi latérale (4, 5) du bac (2) de batterie est renforcée au moins par endroits ou présente un renfort (44), en particulier de telle sorte qu'au moins 30 %, de préférence au moins 40 % de la surface de la paroi latérale (4, 5) soient réalisés en double couche.

14. Support de batterie selon l'une quelconque des revendications 1 à 13, **caractérisé en ce qu'**une bride d'assemblage (35, 36) présente plusieurs pattes d'assemblage (47) disposées à distance les unes des autres dans la direction longitudinale du profilé extérieur (17), dans lequel les brides d'assemblage (35, 36) sont en particulier soudées par points ou collées par points au bac (2) de batterie.

15. Support de batterie selon l'une quelconque des revendications 1 à 14, **caractérisé en ce que** la douille (23) est réalisée en plusieurs parties et présente un premier élément de douille et un deuxième élément de douille, dans lequel les éléments de douille présentent des ouvertures de passage coaxiales et sont reliés entre eux sur des faces frontales orientées l'une vers l'autre.
